## Europäisches Patentamt
## European Patent Office
## Office européen des brevets

(11) Veröffentlichungsnummer: **0 149 008**
**B1**

(12) ## EUROPÄISCHE PATENTSCHRIFT

(45) Veröffentlichungstag der Patentschrift:
24.02.88

(21) Anmeldenummer: 84111813.6

(22) Anmeldetag: 03.10.84

(51) Int. Cl.⁴: **F 16 H 49/00** //
**F16H1/32, F16H25/06**

(54) Planetengetriebe.

(30) Priorität: 06.10.83 DE 3336661

(43) Veröffentlichungstag der Anmeldung:
24.07.85 Patentblatt 85/30

(45) Bekanntmachung des Hinweises auf die Patenterteilung:
24.02.88 Patentblatt 88/8

(84) Benannte Vertragsstaaten:
BE CH DE FR GB LI LU NL SE

(56) Entgegenhaltungen:
EP-A-0 047 920
DE-A-2 617 951

(73) Patentinhaber: **Balcke- Dürr AG, Homberger Strasse 2 Postfach 1240, D-4030 Ratingen 1 (DE)**

(72) Erfinder: **Fickelscher, Kurt G., Herderstrasse 19, D-6710 Frankenthal (DE)**

(74) Vertreter: **Klose, Hans, Dipl.- Phys., Kurfürstenstrasse 32, D-6700 Ludwigshafen (DE)**

LIBER, STOCKHOLM 1988

**Beschreibung**

Die Erfindung bezieht sich auf ein Planetengetriebe mit zwei nebeneinanderliegenden Zentralrädern unterschiedlicher Zähnezahlen und keilförmigen Zähnen, welche miteinander virtuelle Zahnlücken mit einer virtuellen Kopfkurve bilden und mit einem Planetenrad, dessen Zähne mittels eines Drehkörpers in die virtuellen Zahnlücken hineingedrückt werden.

In der DE-PS-26 17 951 ist ein Planetengetriebe beschrieben, welches zwei innenverzahnte Zentralräder mit unterschiedlichen Zähnezahlen aufweist. Bei Drehung des Drehkörpers werden die Zähne des Planetenrades in die virtuellen Zahnlücken hineingedrückt, wobei aufgrund der schwenkbaren sowie elastischen Anordnung der Zähne des Planetenrades eine Anpassung an die Änderung der virtuellen Zahnlücken erreicht wird. Derartige Planetengetriebe gelangten bisher überwiegend bei Stellantrieben zum Einsatz. Es hat sich gezeigt, daß die bekannten Planetengetriebe für höhere Drehzahlen und kleine Untersetzungen, etwa im Bereich zwischen 1 : 30 bis herab zu 1 : 6, bisher nur bedingt einsatzfähig sind. Die Änderungen des Öffnungswinkels der virtuellen Zahnlücken und des Einlaufwinkels werden hierbei so groß, daß die bisher bekannten Anpassungen mittels elastischem Zahnband, elastischem Steg oder schwenkbaren Zähnen nicht ausreichen, um durch die Änderungen des Einlaufswinkels bedingten Wälzbewegungen von den Zahnflanken fernzuhalten. Es wurden Planetengetriebe der genannten Art, welche auch als Gleitkeilgetriebe bezeichnet werden, mit wälzfähigen Profilen erprobt, wobei bis zu 30 % der Zähne in Eingriff standen; infolge der Krümmung aller Zahnflanken ergaben sich entsprechend große Hertz'sche Pressungen, so daß wesentlich niedrigere Drehmomente übertragbar sind, als bei flächiger Anlage der Zahnflanken. Ferner müssen bei der Fertigung der Zentralräder und des Planetenrades mit speziellen Profilen der Zahnflanken sehr enge Fertigungstoleranzen eingehalten werden, wodurch hohe Herstellungskosten bedingt sind. Schließlich sind bisher bekannt gewordene elastische Anordnungen und Ausgestaltungen vom Planetenrad zur Realisierung kleiner Übersetzungen nur wenig geeignet.

Ferner ist aus der DE-PS-30 34 133 ein Planetengetriebe der eingangs genannten Art bekannt, bei welchem die Zähne wenigstens eines Zentralrades mittels zylindrischen Bolzen schwenkbar gelagert sind. Mit einem derartigen Getriebe lassen sich zwar vergleichsweise große Drehmomente übertragen, doch ergeben sich auch hier Schwierigkeiten im Hinblick auf höhere Drehzahlen.

Der Erfindung liegt daher die Aufgabe zugrunde, ein Planetengetriebe der eingangs genannten Art mit einem geringen konstruktiven Aufwand derart zu verbessern, daß mit kleinem konstruktiven Aufwand Untersetzungen bis zu 1 : 6 erzielt werden können, ohne daß Nachteile im Hinblick auf die Größe des übertragbaren Drehmomentes auftreten. Ferner sollen Wälzbewegungen im Bereich der Zahnflanken weitgehend vermieden werden und durch eine konstante Radialgeschwindigkeit soll eine hohe Drehgenauigkeit auch bei großen Antriebsdrehzahlen erhalten werden. Ferner soll das Planetengetriebe besonders für Untersetzungen kleiner 1 : 30 zum Einsatz gelangen. In der Herstellung aufwendige Zahnformen sollen vermieden werden, wobei zur Vermeidung von honen Hertz'schen Pressungen eine weitgehend flächige Anlage der Zahnflanken gegeben sein soll. Das Planetengetriebe soll bei einem geringen Gewicht und einem geringen Bauvolumen auch für die Übertragung großer Drehmomente geeignet sein.

Die Lösung dieser Aufgabe erfolgt bei einer Zähnezahldifferenz von vier der Zentralräder durch die Lehre nach Anspruch 1, wobei der Mittelpunkt der virtuellen Kopfkurve sowie die unterschiedlichen Radien der Zentralräder derart vorgegeben sind, daß in dem vorwählbaren Eingriffsbereich der Einlauf- und/oder Auslaufwinkel und/oder die Radialgeschwindigkeit der Zähne des Planetenrades im wesentlichen konstant sind, und daß die Flankenwinkel der Zentralräder zumindest um den Betrag des zweifachen Einlaufwinkels sich unterscheiden. Bei einer Zähnezahldifferenz von zwei wird die Aufgabe gemäß Anspruch 2 gelöst, wobei die virtuelle Kopfkurve bei einer 90 Grad Drehung weitgehend aus der virtuellen Zahnreihe herausläuft und der Eingriffsbereich im Bereich der minimalen Änderung des Einlauf- und/oder Auslaufwinkels liegt.

Mit einem vergleichsweise geringen konstruktiven Aufwand werden Wälzbewegungen weitgehend vermieden und von Teilung zu Teilung erfolgt eine weitgehend konstante Radialverschiebung der Zähne des Planetenrades, so daß eine praktisch ungestörte harmonische Drehbewegung durchgeführt wird. Wesentlich ist, daß ohne spezielle und nur mit hohen Kosten zu fertigende Zahnformen der Zentralräder vermieden werden und eine flächige Anlage der Zahnflanken gewährleistet ist. Das Planetengetriebe kann nicht nur in den bisher bekanntgewordenen Stellantriebe zum Einsatz gelangen, sondern es werden nunmehr neue Einsatzgebiete auch für höhere Drehzahlen erschlossen. Das Planetengetriebe hat auch und gerade bei Untersetzungen kleiner 1 : 30 einen überraschend einfachen Aufbau, wobei durch geeignete Vorgabe der Durchmesser der beiden Zentralräde und der somit erreichten Kopfkurvenverschiebung mit einem äußerst geringen Aufwand den jeweiligen Anforderungen Rechnung getragen werden kann. Durch die erfindungsgemäße Kopfkurvenverschiebung kann der Verlauf der virtuellen Kopfkurve derart vorgegeben werden, daß den betrieblichen und konstruktiven Anforderungen in optimaler Weise entsprochen werden kann. Es erfolgt eine Anpassung an die virtuelle Teilungsänderung und erfindungsgemäß bleibt das Verhältnis von Radialverschiebung zu Teilung im wesentlichen konstant. Das erfindungsgemäße Planetengetriebe mit Zähnezahldifferenz gleich vier ist besonders für hohe Drehzahlen geeignet. Bei entsprechenden Freiheitsgraden der Zähne bzw. Gleitkeile des Planetenrades werden Untersetzungen bis 1 : 6 erreicht. Hohe spezifische Drehmomente werden mit überraschend großer Laufruhe im bevorzugten Übersetzungsbereich zwischen 1 : 120 und 1 : 6 übertragen. Der bevorzugte Einsatzbereich des Getriebes mit einer Zähnezahldifferenz von zwei liegt erfindungsgemäß zwischen 1 : 300 und 1 : 40, wobei vor allem sehr hohe Drehmomente bei mittleren Drehzahlen übertragen werden. Im Vergleich mit einem Getriebe der Zähnezahldifferenz von vier hat ein Getriebe mit einer Differenz von zwei einerseits für gleiche Übersetzung die halbe Zähnezahl und andererseits hat es doppelt so große Zähne und eine doppelt so große Exzentrizität. Beide Bauarten können im Rahmen der Erfindung völlig spielfrei und sogar mit Vorspannung gebaut werden. Schließlich sind die vergleichsweise kleinen Zahngeschwindigkeiten sowie die Geräusch- und Schwingungsarmut in der Praxis von maßgebender Bedeutung.

In einer besonderen Ausführungsform sind die Flankenwinkel der Zähne des zweiten Zentralrades mit der geringeren Zähnezahl um den zweifachen Einlaufwinkel größer als die Flankenwinkel der Zähne des ersten Zentralrades, wobei die Flankenwinkel der Zähne des Planetenrades einen dazwischenliegenden Wert aufweisen oder näherungsweise gleich groß sind wie die Flankenwinkel des zweiten Zentralrades. Darüberhinaus werden die Zahnflanken der Zähne des Planetenrades zum Zahnfuß und/oder zum Zahnkopf hin um einen kleinen Winkel abgeflacht bzw. mit einem vergleichsweise großen Krümmungsradius versehen. Durch diese Maßnahmen wird in besonders einfacher Weise die flächenhafte Anlage der Zahnflanken auch bei kleinen Übersetzungsverhältnissen bis in den Bereich 1 : 6 erreicht. Die Flächenpressung kann niedrig gehalten werden, und bei kleinem Bauvolumen können entsprechend große Drehmomente übertragen werden. Es wird ferner gewährleistet, daß in einzelnen Abschnitten der Radialverschiebung der jeweilige Flankenwinkel nahezu identisch ist mit dem zugehörigen Lückenwinkel. Die erfindungsgemäß ausgebildeten Zähne des Planetenrades gewährleisten mit einem geringen konstruktiven Aufwand die Anpassung an den sich ändernden virtuellen Flankenwinkel, wobei auch im Hinblick auf eine gleichmäßige Verschiebung der Zähne eine Tangenzkorrektur des Drehkörpers für das Planetenrad erfindungsgemäß vorgenommen wird. Aufgrund der Tangenzkorrektur des Drehkörpers werden die Zähne des Planetenrades derart in die virtuellen Zahnlücken hineingedrückt, daß eine spielfreie und flächige Anlage gewährleistet ist. Dies ist vor allem bei einer gekrümmten Ausbildung der Zahnflanken von Planetenrad von wesentlicher Bedeutung. Im Vergleich mit ebenen Flanken eines Zahnes wird bei gekrümmten Zahnflanken im Auflagebereich deren Abstand entsprechend kleiner sein, und der Zahn muß entsprechend weiter in die virtuellen Zahnlücken hineingedrückt werden. Die effektive Zahnhöhe wird im Eingriffsbereich also entsprechend größer sein, und mittels der Tangenzkorrektur wird erfindungsgemäß der Drehkörper einen entsprechend vergrößerten Druchmesser aufweisen. Es sei ferner ausdrücklich daraufhingewiesen, daß aufgrund des im wesentlichen konstanten Einlauf- bzw. Auslaufwinkels zwischen den in Eingriff stehenden Zähnen praktisch keine Wälzbewegung auftritt. Aufgrund der Winkelkorrektur wird sichergestellt, daß praktisch sämtliche Zähne des Planetenrades mit den in Eingriff befindlichen Zahnflanken der Zentralräder jeweils einen im wesentlichen gleich großen Flächenkontakt aufweisen und folglich eine hervorragende Lastverteilung erreicht wird. Gegenüber bekannten Getrieben kann das erfindungsgemäße Planetengetriebe bei ansonsten übereinstimmenden Abmessungen wesentlich höhere Drehmomente übertragen.

In einer zweckmäßigen Ausgestaltung, bei welcher die Zähnezahldifferenz von vier gegeben ist, liegt für einen innerhalb eines Quadranten liegenden Eingriffsbereich der Mittelpunkt der virtuellen Kopfkurve im benachbarten Quadranten. Der genannte Mittelpunkt weist zum Mittelpunkt der Zentralräder in der x- und der y-Richtung jeweils einen Abstand auf, der zumindest näherungsweise halb so groß ist wie die Höhe H der virtuellen Kopfkurve im Einggriffsbereich, wobei in der Übergangszone der beiden Quadranten die Kopfkurve abgeflacht ist. Durch diese in besonders einfacher Weise und mit einem geringen fertigungstechnischen Aufwand zu realisierenden Maßnahme wird gewährleistet, daß von Teilung zu Teilung eine im wesentlichen konstante Radialverschiebung eintritt. Es sei ausdrücklich festgehalten, daß diese Maßnahme sowohl für die Eingriffsbereiche mit einlaufenden als auch mit auslaufenden Zähnen des Planetenrades gilt. Die Einlaufkurve wird durch Viertelkreise erzeugt, die in der x-Richtung um den zweifachen Betrag des genannten Abstandes zusammengedrückt und in der y-Richtung um den zeifachen Betrag auseinandergedrückt sind.

In einer alternativen Ausführungsform, bei welcher eine Zähnezahldifferenz von zwei gegeben ist, liegt der Mittelpunkt der Kopfkurve für einen innerhalb eines Quadranten liegenden Eingriffsbereich auf der Mittellinie zum benachbarten Quadranten. Hierbei weist der genannte Mittelpunkt zum Mittelpunkt der Zentralräder in der y-Richtung einen Abstand auf, der näherungsweise so groß ist wie die Höhe H der Kopfkurve im Eingriffsbereich, wobei im Bereich der genannten Mittellinie die Kopfkurve abgeflacht ist. Die genannte Höhe ist im wesentlichen gleich groß wie die Höhe der Zähne des Zentralrades mit dem kleineren Durchmesser. Es sei angemerkt, daß bei der angegebenen Zähnezahldifferenz von zwei mit der halben Zähnezahl der Zentralräder das gleiche Übersetzungsverhältnis erreichbar ist wie bei einer Zähnezahldifferenz von vier. Ferner werden im Vergleich mit einer Zähnezahldifferenz von vier im Falle einer Zähnezahldifferenz von zwei bei gleichem Flankenwinkel auch zwei doppelt so große Zähne und eine doppelt so große Exzentrität erhalten. Diese Zusammenhänge machen ein Planetengetriebe mit einer Zähnezahldifferenz von zwei besonders geeignet für größere Übersetzungen, insbesondere bei Verwendung von Plastikzähnen sowie einfach herzustellenden federnden Zahnbändern. Der zugeordnete Drehkörper weist eine quasi eliptische Form auf. Aufgrund der erfindungsgemäßen Kopfkurvenverschiebung wird die Änderung des Einlauf- bzw. Auslaufwinkels nicht unwesentlich kleiner, wobei die Winkeländerung immer in der gleichen Richtung erfolgt. Die Kurve für die Winkeländerung weist im Eingriffsbereich auch keine Wendepunkte auf. Schließlich sei besonders hervorgehoben, daß mit größer werdender Übersetzung die Änderung des Einlaufwinkels geringer wird; auch die Krümmung einer die Winkeländerung darstellenden Kurve wird mit zunehmendem Übersetzungsverhältnis geringer.

In einer besonderen Ausführungsform sind die Zahnflanken der Zähne des Planetenrades zu ihrem Zahnfuß und/oder zu ihrem Zahnkopf um einen vorgegebenen kleinen Winkel bzw. mit einem großen Krümmungsradius abgeflacht. Die keilförmigen Zähne des Planetenrades weisen also keine vollständig ebenen Zahnflanken auf, sondern sie sind in der angegebenen Weise etwas abgeflacht. Eine flächenhafte Anlage der Zähne der Zentralräder wird in besonders einfacher Weise gewährleistet. Es sei ausdrücklich festgehalten, daß es sich hier nicht um aufwendig herzustellende Zahnflankenformen handelt, sondern daß eine mit geringem Fertigungsaufwand und ohne besondere Verzahnungsmaschinen herzustellende Abflachung vorgenommen wird. Die Flankenform der Zähne des Planetenrades wird somit an den sich ändernden Flankenwinkel Alpha v in einzelnen Abschnitten der Radialverschiebung angepaßt. In den einzelnen Abschnitten ist der Flankenwinkel gleich dem Lückenwinkel, wobei eine sich von Abschnitt zu Abschnitt ergebende gestufte Winkeländerung durch einen Kurvenzug mit einem entsprechend großen Radius geglättet wird. In Verbindung mit der erfindungsgemäßen Tangenzkorrektur erfolgt eine Anpassung an Änderungen der effektiven Zahnhöhen der Zähne des Planetenrades. So entspricht die Abflachung zu den Zahnspitzen hin im Vergleich mit ebenen Zahnflanken einer geringfügigen Verringerung des Abstandes der Zahnflanken des Zahnes, so daß der Zahn auch entsprechend weiter nach außen vom Drehkörper gedrückt werden muß, was durch die angegebene Tangenzkorrektur erreicht wird.

In einer besonderen Ausführungsform weist das Planetenrad einen Tragring für die als Gleitkeile ausgebildeten Zähne auf, wobei mittels Haltekörpern für jeden Zahn eine Welle mit dem Tragring verbunden ist. Die einzelnen Gleitkeile sind in ihrem Inneren zumindest teilweise hohl ausgebildet und sie umgreifen die genannte Welle jeweils über einen Winkel größer als 180°. Bei einfacher Konstruktion und geringem Platz- und Gewichtsbedarf ist eine funktionsgerechte Anordnung der Gleitkeile des Planetenrades geschaffen. Die Gleitkeile sind um die jeweiligen Wellen in gewissem Maße schwenkbar, um unter allen Betriebsverhältnissen die Anpassung an die sich ändernden virtuellen Zahnlücken zu gewährleisten. Zweckmäßig sind im Hinblick auf ein geringes Gewicht die Wellen hohlzylindrisch ausgebildet, wobei an beiden axialen Enden jeweils der Haltekörper mit einem Zapfen in die Welle zweckmäßig im Pressitz eingreift. Ferner weisen die Haltekörper einen radial innenliegenden Haken oder Ansatz auf, welcher die Stirnfläche des Tragringes übergreift. Die Gleitkeile sind mit einem geringen konstruktiven Aufwand, wobei auch eine einfache Herstellung gewährleistet wird, bezüglich des Tragringes bewegbar angeordnet, so daß auch insoweit eine Anpassung an die Teilungsänderung gegeben ist.

In einer besonderen Ausführungsform liegen die Zähne des Planetenrades mit ihren Spitzen an einem das Planetenrad umgebenden Haltering an. Dieser Haltering befindet sich zweckmäßig zwischen den beiden Zentralrädern, welche jeweils eine entsprechende ringförmige Ausnehmung aufweisen. Der Haltering 50 weist eine vergleichsweise geringe Wandstärke auf und ist elastisch ausgebildet. Die einzelnen Zähne des Planetenrades werden somit mittels des Halteringes festgehalten und eine spielfreie Anordnung ist gewährleistet.

Weitere erfindungswesentliche Merkmale und Vorteile ergeben sich aus den nachfolgend an Hand der Zeichnung näher erläuterten Ausführungsbeispielen. Es zeigen:

Fig. 1 schematisch eine axiale Ansicht einer Ausführungsform in einem Quadranten bei einer Zähnezahldifferenz gleich 4,

Fig. 2 schematisch einen radialen Schnitt ähnlich Fig. 1, jedoch für eine Zähnezahldifferenz von 2,

Fig. 3 einen axialen Schnitt durch eine zweckmäßige Ausführungsform,

Fig. 4 und 5 einen radialen Schnitt entlang Schnittlinie IV gemäß. Fig. 4,

Fig. 6 vergroßert einen Schnitt durch einen als Gleitkeil ausgebildeten Zahn des Planetenrades,

Fig. 7 einen Schnitt entlang Schnittlinie VII gem. Fig. 6,

Fig. 8 die Änderung des Einlaufwinkls Beta bei einer Zähnezahldifferenz gleich vier,

Fig. 9 die Änderung des Flankenwinkels Delta Alpha,

Fig. 10 die Änderung Alpha v der virtuellen Zahnlücken,

Fig. 11 teilweise einen Zahn des Planetenrades mit angepaßter gestufter Winkeländerung,

Fig. 12 die Änderung des Einlaufwinkels Beta bei einer Zähnezahldifferenz gleich zwei,

Fig. 13 eine viertel Evolute des Beispieles gemäß Fig. 2,

Fig. 14 den Verlauf der Radialverschiebung bei einer Zähnezahldifferenz gleich vier gemäß Fig. 1.

Fig. 15 einen axialen Schnitt, ähnlich Fig. 3, wobei die Zähne des Planetenrades von einem Haltering umgeben sind,

Fig. 16 einen vergrößerten Schnitt entlang Schnittlinie XVI gemäß Fig. 5.

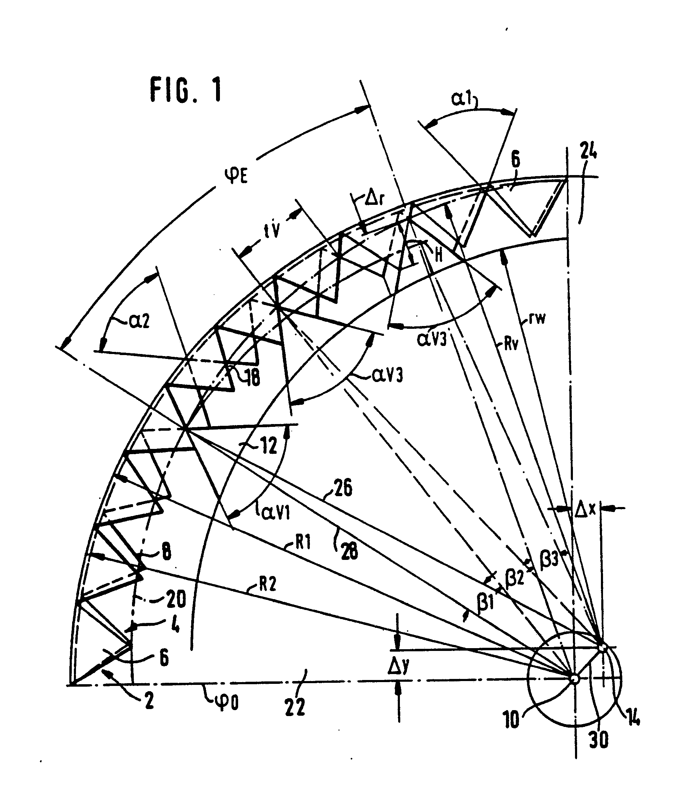

Fig. 1 zeigt schematisch in einer axialen Ansicht einen Teil des Planetengetriebes mit zwei innenverzahnten Zentralrädern 2, 4, von welchen aus Gründen der Übersichtlichkeit jedoch nur die Zähne 6, 8 dargestellt sind. Das in Blickrichtung vordere, erste Zentralrad 2 weist einen Fußkreisradius R 1 und das dahinterliegende, zweite Zentralrad 4 einen kleineren Fußkreisradius R 2 auf, wobei ein gemeinsamer Mittelpunkt 10 vorhanden ist. Das vordere Zentralrad 2 weist über den gesamten Umfang betrachtet insgesamt vierzig Zähne 6 auf, und das hintere Zentralrad 4 weist insgesamt sechsunddreißig Zähne 8 auf. Die Zähnezahldifferenz Delta Z beträgt somit 4, und es ist ferner bei dieser bevorzugten Ausführungsform ein Übersetzungsverhältnis von 1 : 10 gegeben. Das Verhältnis der Zahnhöhe H zum Radius R 1 beträgt 0,12. Vom Planetenrad sind aus Gründen der Übersichtlichkeit nur drei Zähne 12 dargestellt, welche auf einer Kurve mit dem Radius rw um einen noch zu erläuternden Mittelpunkt 14 einer Kopfkurve 16 bewegt und im Eingriffsbereich in die virtuellen Zahnlücken 16 hineingedrückt werden. Für die drei Zähne 12 des Planetenrades sind die virtuellen Zahnlückenwinkel Alpha V 1, Alpha V 2 und Alpha V 3 angegeben. Das vordere Zentralrad 2 weist einen Zahnlückenwinkel Alpha 1, und das hintere Zentralrad 4 weist einen Zahnlückenwinkel Alpha 2 auf.

Die beiden innen verzahnten Zentralräder 2, 4, welche als Hohlräder ausgebildet sind, sind drehbar um den gemeinsamen Drehpunkt bzw. Mittelpunkt 10 angeordnet. Es bedarf keiner besonderen Hervorhebung, daß in den anderen drei hier nicht dargestellten Quadranten die Zentralräder 2, 4 in entsprechender Weise ausgestaltet sind. Aufgrund der vorgegebenen Differenz der Fußkreisradien R 1 und R 2 erfolgt eine Verschiebung der Kopfkreiskurve 20, welche bei dem Winkel Phi 0 aus den Zähnen heraustritt und nach einem Winkel von 90°, also oben in der Zeichnung, mit dem Fußkreisradius R 2 im wesentlichen übereinstimmt. Für den Eingriffsbereich des dargestellten Quadranten 22 liegt der Mittelpunkt der Kopfkurve 20 erfindungsgemäß in dem benachbarten Quadranten 24, wobei zum gemeinsamen Mittelpunkt 10 in x- und y-Richtung jeweils ein Abstand Delta y und Delta x im wesentlichen gleich der halben Höhe H der Kopfkurve im Eingriffsbereich gegeben ist. Die im Eingriffsbereich dargestellten drei Zähne 12 sind als Gleitkeile auf einem Tragring schwenkbar angeordnet und werden bei Drehung eines Drehkörpers in Richtung von Fahrstrahlen 26 verschoben, die vom Mittelpunkt 14 ausgehen und die Kopfkurve 20 in der dargestellten Weise schneiden. Die Fahrstrahlen 26 bilden jeweils mit einer Linie 28, welche ebenfalls die Kopfkurve schneidet, jedoch durch den gemeinsamen Mittelpunkt 10 verläuft, einen Winkel Beta 1, 2, 3. Über die Verbindungslinie 30 bilden die Linien 26 und 28 jeweils einander weitgehend ähnliche Dreiecke, die die genannten Einlaufwinkel einschließen. Da die Verbindungslinie 30 und auch die Fahrstrahlen 26 bzw. der Durchmesser Rv der Kopfkurve 20 konstant bleiben, ergibt sich auch für den Einlaufwinkel Beta nur eine geringfügige Änderung und zwar entsprechend der Differenz R 1 minus Delta r. Bei der vorliegenden Ausführungsform hat sich überraschenderweise ergeben, daß in dem vorgegebenen Eingriffsbereich sich der Einlaufswinkel Beta 1, 2, 3 nur unwesentlich in dem Bereich zwischen 5° und 5,2° verändert.

Es wird somit von Teilung tv zur nächsten Teilung eine im wesentlichen konstante Radialverschiebung der Gleitkeile bzw. Zähne 12 des Planetenrades erreicht. Von maßgebender Bedeutung ist ferner, daß auch die Teilung tv sich jeweils kontinuierlich um einen gleichen Betrag Delta tv ändert, zumal die genannten Einlaufwinkel im wesentlichen winkelgleich sind. Das Getriebe ist aufgrund der derart erreichten kinematischen Eigenschaften für hohe Antriebszahlen besonders geeignet. Darüberhinaus ist von maßgebender Bedeutung, daß auch sehr kleine Übersetzung bis zu Verhältnissen von 1 : 6 mit nur zwei Zentralrädern ohne Schwierigkeiten realisiert werden. Es sei darauf hingewiesen, daß der Eingriffsbereich nahezu unabhängig von dem Übersetzungsverhältnis ist. Die Einlaufkurve oder auch Nockenwelle wird durch Viertelkreise vorgegeben, die über den Umfang betrachtet zweimal um Delta x zusammengedrückt bzw. um Delta y auseinandergedrückt sind. Es sei besonders festgehalten, daß die kontinuierliche Kreiskrümmung sich hervorragend für Planetengetriebe mit Gleitlagern eignen. Die Flankenwinkel der Zähne werden insbesondere unter Berücksichtigung der Exzentrizität und des Wirkungsgrades vorgegeben; je kleiner der Flankenwinkel gewählt wird, desto größer wird der Wirkungsgrad, wobei aber auch die Exzentrizität größer wird. In der dargestellten bevorzugten Ausführungsform beträgt der Flankenwinkel Alpha 1 60° und unter Berücksichtigung des oben erläuterten Einlaufwinkels Beta von etwa 5° ergibt sich ein Flankenwinkel Alpha 3 des Gleitkeiles bzw. Zahnes 12 vom Planetenrad von näherungsweise 70°. Da aufgrund des im wesentlichen konstanten Einlaufwinkels keine Wälzbewegung zwischen den Zähnen stattfindet, wird auch der Flankenwinkel des zweiten Zentralrades 4 mit 70° vorgegeben. Schließlich werden im Rahmen der Erfindung die Flankenwinkel der Zähne 12 gemäß der Winkeländerung im Eingriffsbereich noch leicht abgerundet. Bei der dargestellten Ausführungsform mit insgesamt 38 Gleitkeilen bzw. Zähnen 12 sind zwölf einlaufende und zwölf auslaufende Gleitkeile mit den zugeordneten Zentralrädern nahezu flächig im Eingriff. Es ist von besonderer Bedeutung, daß in jedem Quadranten etwa 6 Gleitkeile in Eingriff stehen, und es wird eine überraschend gleichmäßige Lastverteilung erreicht, so daß mit dem erfindungsgemäßen Getriebe wesentlich höhere Drehmomente übertragbar sind als bisher.

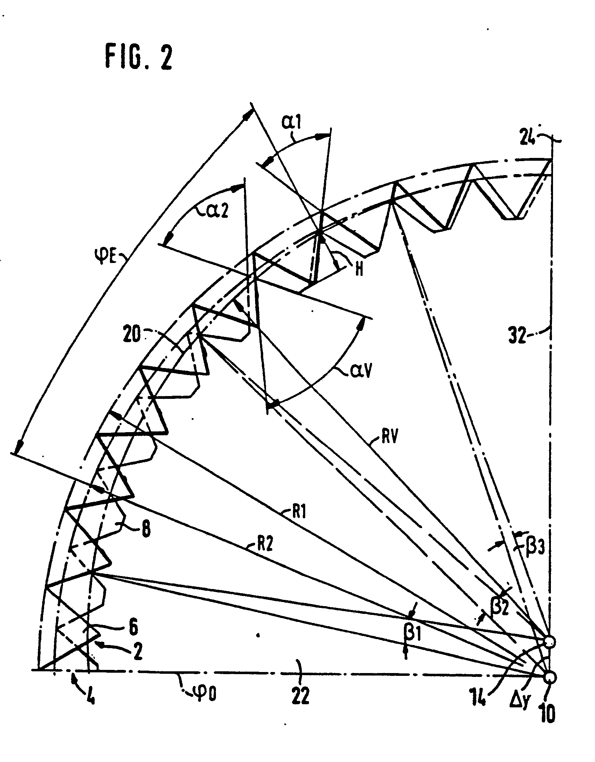

Fig. 2 zeigt eine Ausführungsform des Planetengetriebes mit einer Zähnezahldifferenz Delta z = 2. Das vordere Zentralrad 2 enthält vierzig Zähne 6, während das hintere Zentralrad 4 insgesamt achtunddreißig Zähne 8 aufweist. Gemäß Zeichnung ist die virtuelle Kopfkurve 20 bei dem Winkel Phi 0 aus den Zahnreihen praktisch herausgelaufen. Der Mittelpunkt 14 der Kopfkurve 20 befindet sich nunmehr auf einer Mittellinie 32, welche den Quadranten 22 von dem benachbarten Quadranten 24 trennt. Die Mittelpunkte 10 und 14 weisen in Richtung der Y-Achse einen Abstand Delta y auf, der näherungsweise halb so groß ist wie die Zahnhöhe H. Der dem Planetenrad zugeordnete Drehkörper weist eine quasi eliptische Form auf. Infolge der erläuterten Kopfkurvenverschiebung ergibt sich eine wesentliche Verringerung der Änderung der Einlaufwinkel Beta. Der bevorzugte Eingriffsbereich liegt bei Übersetzungsverhältnissen von etwa 1 : 20 bevorzugt zwischen 55 und 80 Winkelgraden und für Übersetzungsverhältnissen von etwa 1 : 60 zwischen 40 und 80 Winkelgraden. In diesen Bereichen können die Kurvenzüge durch Geraden ersetzt werden, und es wird eine nahezu gleichmäßige Radialverschiebung erreicht. Es sei festgehalten, daß der Eingriffsbereich sich mit fallender Übersetzung verringert.

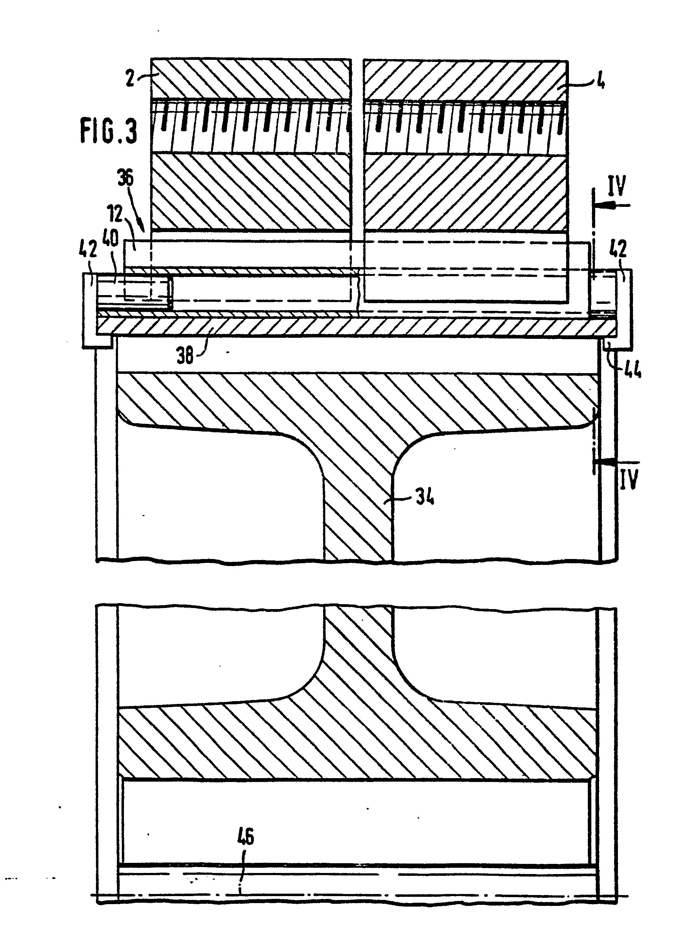

Fig. 3 zeigt eine besondere Ausführungsform, bei welcher nunmehr auch der Drehkörper 34 zu erkennen ist. Das Planetenrad 36 weist einen Tragring 38 auf, auf welchem die Zähne 12 um eine Welle 40 schwenkbar angeordnet sind. Mittels Haltekörpern 42 ist die Welle 40 im Bereich ihrer beiden axialen Stirnflächen mit dem Tragring 38 verbunden. Der Haltekörper 42 weist einen radial innen liegenden Ansatz 44 auf, welcher den Tragring 38 in der dargestellten Weise umgreift. Die Zentralräder 2, 4 liegen in Richtung der Drehachse 46 nahe beieinander; der oben erläuterte gemeinsame Mittelpunkt der beiden Zentralräder liegt auf der genannten Drehachse 46.

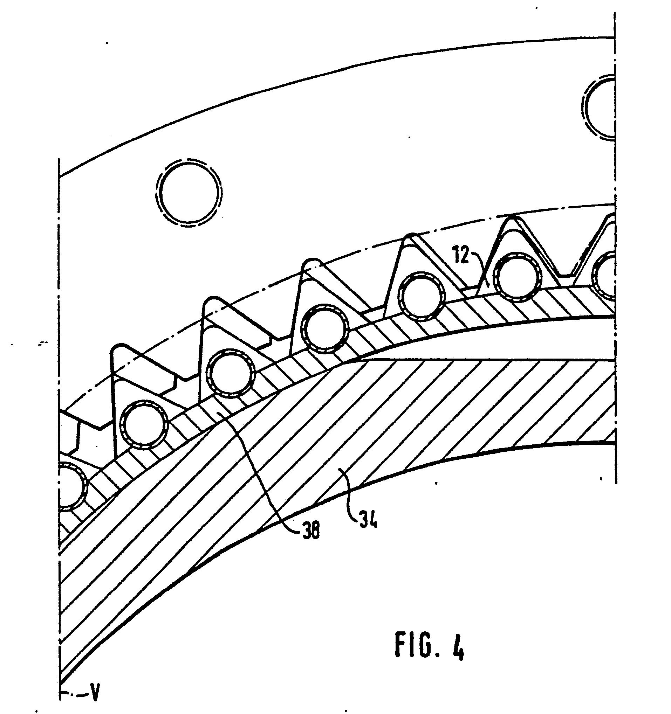

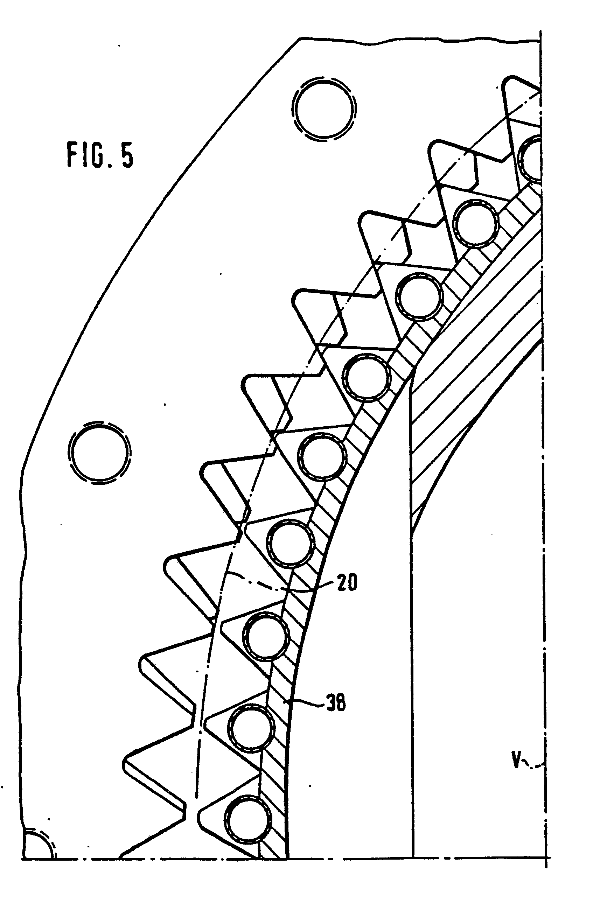

Fig. 4 und 5 zeigen das Planetengetriebe gem. Fig. 3 in einem radialen Schnitt entlang Schnittlinie IV. Die Schnittlinie V ist in beiden Figuren die gleiche; d.h. Fig. 5 schließt sich links an Fig. 4 in entsprechender Weise an. Der Tragring 38 liegt auf dem Drehkörper 34 über einen vorgegebenen Winkelbereich auf, durch welchem im wesentlichen der Eingriffsbereich definiert ist.

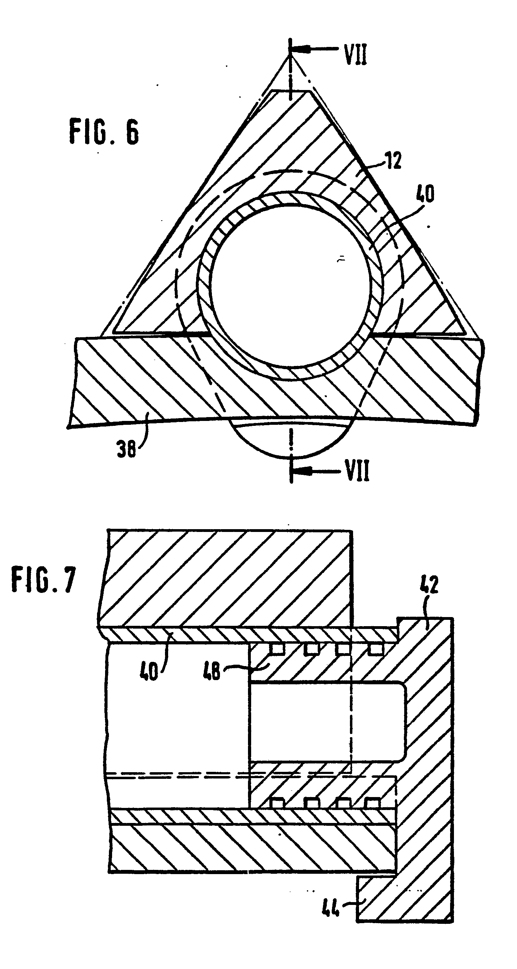

Fig. 6 zeigt vergrößert einen Zahn 12, der um die hohlzylindrisch ausgebildete Welle 40 in gewissem Maße auf dem Tragring 38 schwenkbar angeordnet und befestigt ist. In Verbindung mit Fig. 7 ist zu erkennen, daß der Haltekörper 42 mit einem Zapfen 48 in die Hohlwelle 40 eingreift, während der Ansatz 44 den Tragring 38 an seiner radialen Innefläche mit einem vorgegebenen Spiel übergreift. Der Zapfen 48 ist zweckmäßig mit einer Presspassung oder ähnlich in dem Hohlring 40 befestigt. Die Zahnflanken sind im Bereich des Zahnfußes und auch des Zahnkopfes leicht abgerundet, wodurch im Rahmen dieser Erfindung eine flächenhafte Anlage an die Zähne der Zentralräder erreicht wird.

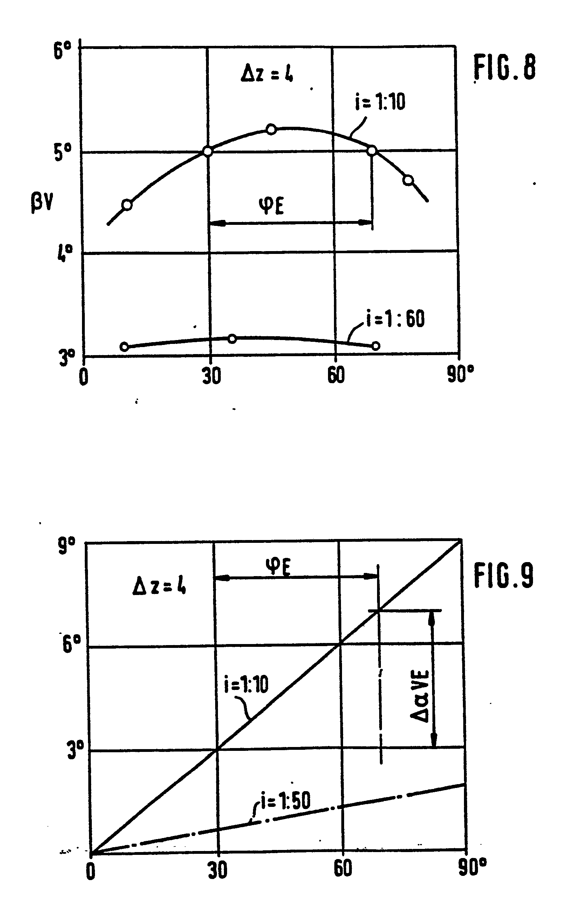

Fig. 8 zeigt die Änderung des Einlaufwinkels Beta für die Untersetzungsverhältnisse 1 : 10 und 1 : 60. Im ersteren Fall ändert sich in dem gewünschten Eingriffsbereich Phi E der Winkel Beta nur unwesentlich von 5 auf 5,2 Grad. Hierdurch ist sichergestellt, daß erfindungsgemäß von Teilung zu Teilung eine im wesentlichen konstante Radialverschiebung erfolgt.

Aus Fig. 9 ist die Änderung des Flankenwinkels Alpha v der virtuellen Zahnlücke zu entnehmen. In dem vorgewählten Eingriffsbereich beträgt diese Änderung etwa vier Grad. Es sei an dieser Stelle ausdrücklich hervorgehoben, daß bei dem erfindungsgemäßen Getriebe durch Abflachung der Außenfläche des Drehkörpers vom Planetenrad der Eingriffsbereich in der erforderlichen Weise vorgegeben wird, wobei außerhalb des Eingriffsbereiches die Zähne entkuppelt werden. Die Zähne können aufgrund der abgeflachten Bereiche ihre Richtung ohne Störung der Drehbewegung umkehren.

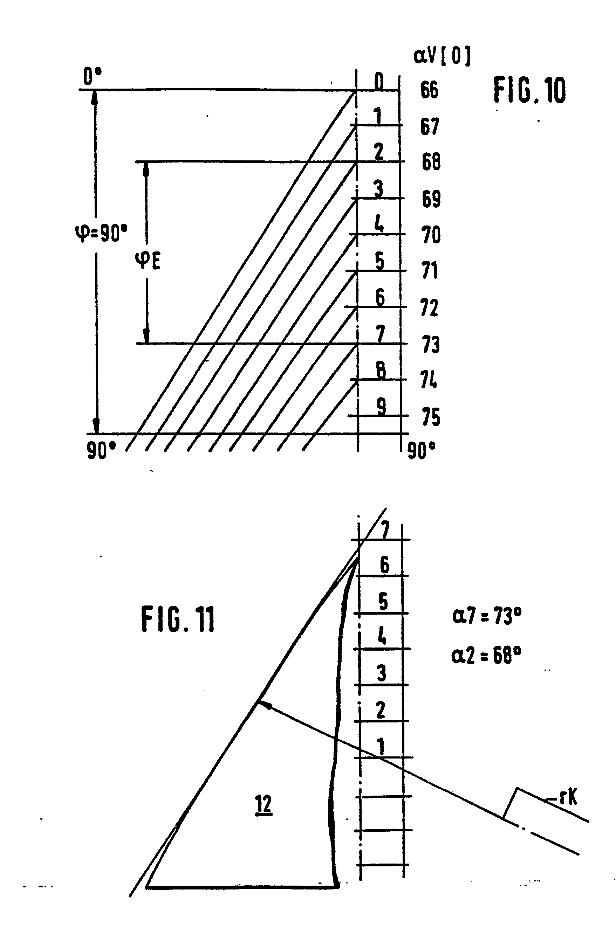

Wie in Fig. 10 dargestellt, ändert sich beispielsweise für ein Untersetzungsverhältnis i = 1 : 10 in einem Quadranten für den Winkelbereich von 0 bis 90 Grad der Flankenwinkel Alpha v der virtuellen Zahnlücken. In einer wesentlichen Ausgestaltung wird die Flankenform der massiven Gleitkeile bzw. der Zähne des Planetenrades an den sich ändernden Flankenwinkel Alpha v in einzelnen Abschnitten der Radialverschiebung angepaßt. Erfindungsgemäß ist in den einzelnen Abschnitten der Flankenwinkel gleich dem Lückenwinkel. Fig. 11 zeigt schematisch in einer axialen Ansicht teilweise einen derart angepaßten Gleitkeil mit gestufter Winkeländerung, wobei die Stufung durch einen Kurvenzug mit einem sehr großen Radius rk geglättet ist. In jeder Veschiebestufe wird eine quasi flächige Anlage erreicht. Zur gleichmäßigen Verschiebung der Gleitkeile wird im Rahmen der Erfindung auch eine Tangenskorrektur der Antriebswelle vorgenommen, zumal sich die effektiven Zahnhöhen in Abhängigkeit von den unterschiedlichen Gleitkeilwinkeln geringfügig verändern.

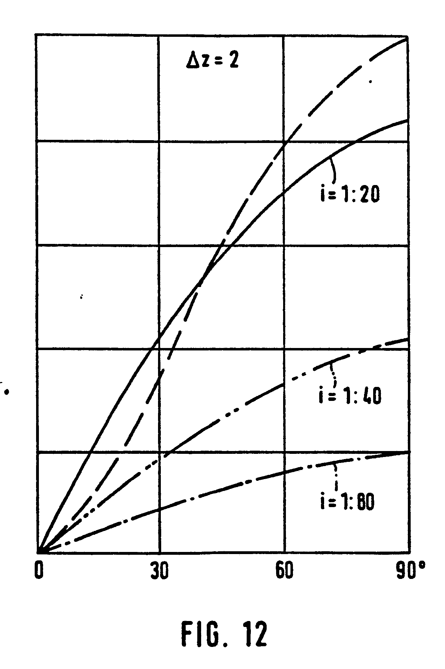

Fig. 12 zeigt die Änderung des Einlaufwinkels Beta bei einer Zähnezahldifferenz von zwei, und zwar für verschiedene Übersetzungen. Die gestrichelte Kurve gilt ohne die vorgeschlagene Kopfkreisverschiebung. Erfindungsgemäß ist also die Winkeländerung kleiner und es ist auch kein Wendepunkt vorhanden. Mit größer werdender Übersetzung werden ferner sowohl die Winkeländerung als auch die Krümmung der Kurven kleiner.

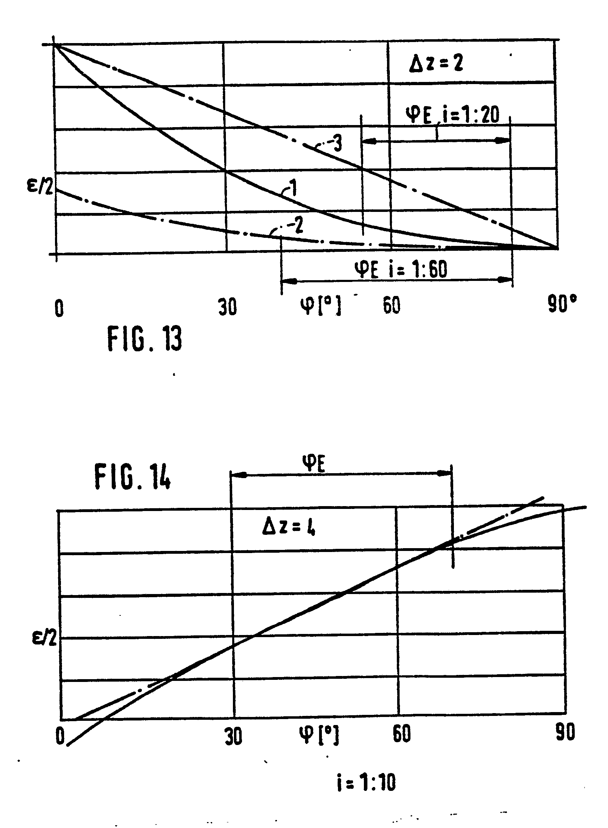

In Fig. 13 sind für Delta z gleich zwei die Viertelevoluten mit vergrößerter Abszisse dargestellt. Der Drehkörper hat eine quasi-elliptische Form, die bei Drehung der Evolute erzeugt wird. Der erfindungsgemäß bevorzugte Eingriffsbereich Phi E liegt für i = 1 : 20 zwischen 55 und 80 Grad und für i = 1 : 60 zwischen 40 und 80 Grad. In diesen Bereichen verlaufen die Kurven nahezu linear un die Radialverschiebung ist weitgehend gleichförmig.

In Fig. 14 ist der Verlauf der Radialverschiebung für Delta z gleich vier und i = 1 : 10 dargestellt. Der vorgewählte Eingriffsbereich liegt bei dieser besonderen Ausführungsform zwischen 30 und 70 Grad; auch hier entspricht der lineare Kurvenverlauf einer konstanten Zahngeschwindigkeit.

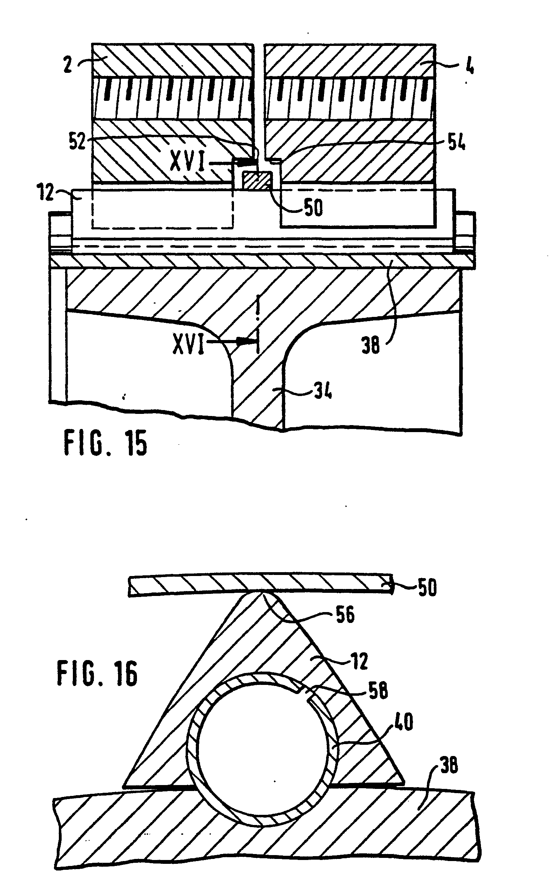

In Fig. 15 ist ein axialer Schnitt ähnlich Fig. 3 dargestellt, wobei jedoch die Zähne 12 des Planetenrades von einem Haltering 50 umgeben sind. Der Haltering 50 befindet sich zwischen den beiden Zentralrädern 2, 4, die jeweils eine ringförmige Ausnehmung 52, 54 aufweisen. Mittels des Halteringes 50, der aufgrund seiner vergleichsweise geringen radialen Höhe elastisch ausgebildet ist, werden die einzelnen Zähne 12 bzw. Gleitkeile zuverlässig auf dem Tragring 38 festgehalten und auf diesen gedrückt. Eine spielfreie und zuverlässige Befestigung der Zähne 12 ist sichergestellt.

In Fig. 16 ist ein Schnitt entlang der Schnittlinie XVI von Fig. 15 dargestellt, wobei jedoch die Zentralräder und auch der Drehkörper nicht dargestellt ist. Die Spitze 56 des Zahnes 12 ist abgerundet, um eine hohe Flächenpressung zu vermeiden. Die als Hohlkörper ausgebildete Welle 40 weist einen in deren Längsrichtung verlaufenden Schlitz 58 auf. Die elastische Anordnung und Abstützung der Zähne 12 des Planetenrades gewährleistet die in radialer Richtung wirksame Federbeaufschlagung der einzelnen Zähne 12 des Planetenrades. In Verbindung mit den wesentlichen Haltering 50 wird zum einen eine elastisch federnde Anordnung und zum anderen aber auch das spielfreie Eindrücken der Zähne in die virtuellen Zahnlücken sichergestellt.

0 149 008

**Bezugszeichenliste**

| | |
|---|---|
| 2, 4 | Zentralrad |
| 6, 8 | Zahn von 2 bzw. 4 |
| 10 | Mittelpunkt |
| 12 | Zahn vom Planetenrad |
| 14 | Mittelpunkt der virtuellen Kopfkurve |
| 18 | Virtuelle Zahnlücke |
| 20 | Kopfkurve |
| 22, 24 | Quadrant |
| 26 | Radialer Fahrstrahl |
| 28 | Linie |
| 30 | Verbindungslinie |
| 32 | Mittellinie |
| 34 | Drehkörper |
| 36 | Planetenrad |
| 38 | Tragring |
| 40 | Welle |
| 42 | Haltekörper |
| 44 | Ansatz |
| 46 | Drehachse |
| 48 | Bolzen |
| 50 | Haltering |
| 52, 54 | Ausnehmung |
| 56 | Spitze |

**Patentansprüche**

1. Planetengetriebe mit zwei nebeneinander angeordneten Zentralrädern (2 4), die eine Zähnezahldifferenz von vier und im wesentlichen keilförmige Zähne (6, 8) aufweisen, welche miteinander virtuelle Zahnlücken (18) mit einer virtuellen Kopfkurve (20) bilden, und mit einem Planetenrad (36), dessen Zähne (12) mittels eines Drehkörpers (34) in die virtuellen Zahnlücken (18) hineingedrückt werden,

dadurch gekennzeichnet, daß der Mittelpunkt (14) der virtuellen Kopfkurve (20) sowie die unterschiedlichen Radien (R1, R2) der Fußkreise der Zentralräder (2, 4) derart vorgegeben sind, daß in einem vorwählbaren Eingriffsbereich (Phi E), in welchem eine Anzahl der Zähne (12) des Planetenrades (36) in den virtuellen Zahnlücken (18) mit den Zähnen (6, 8) in Eingriff sind, deren Einlauf- und/oder deren Auslaufwinkel (Beta) und/oder die Radialgeschwindigkeit der Zähne (12) des Planetenrades (36) im wesentlichen konstant ist,

und daß die Flankenwinkel (Alpha 1, 2) der Zentralräder (2, 4) sich zumindest näherungsweise um den Betrag des zweifachen Einlauf- und/oder Auslaufwinkels (Beta) unterscheiden, wobei die oben aufgeführten Größen wie folgt definiert sind:

der Einlauf- und/oder Auslaufwinkel (Beta) liegt zwischen einer durch den Mittelpunkt (10) der Zentralräder (2, 4) verlaufenden Linie (28) und einem durch den Mittelpunkt (14) der virtuellen Kopfkurve (20) verlaufenden Fahrstrahl (26), welcher gemeinsam mit der Linie (28) in der virtuellen Zahnlücke (18) die Kopfkurve (20) schneidet,

die Radialgeschwindigkeit ist die Geschwindigkeit, mit welcher die Zähne (12) des Planetenrades (36) auf dem Fahrstrahl (26) in die virtuellen Zahnlücken (18) einlaufen bzw. herauslaufen.

2. Planetengetriebe mit zwei nebeneinander angeordneten Zentralrädern (2, 4) die eine Zähnezahldifferenz von zwei und im wesentlichen keilförmige Zähne (6, 8) aufweisen, welche miteinander virtuelle Zahnlücken (18) mit einer virtuellen Kopfkurve (20) bilden, wobei die Radien (R1, R2) der Fußkreise der beiden Zentralräder (2, 4) unterschiedlich groß sind, und mit einem Planetenrad (36), dessen Zähne (12) mittels eines Drehkörpers (34) in die virtuellen Zahnlücken (18) hineingedrückt werden,

dadurch gekennzeichnet, daß der Mittelpunkt (14) der virtuellen Kopfkurve (20) sowie die unterschiedlichen Radien (R1, R2) derart vorgegeben sind, daß die virtuelle Kopfkurve (20) nach einer 90°-Drehung weitgehend aus den Zähnen (6, 8) herausläuft,

und daß der Eingriffsbereich (Phi E), in welchem eine Anzahl der Zähne (12) des Planetenrades (36) in den virtuellen Zahnlücken (18) mit den Zähnen (6, 8) in Eingriff sind, in den Bereich der minimalen Änderung des Einlauf- und/oder Auslaufwinkels (Beta) gelegt ist, der als Winkel definiert ist zwischen einer durch den Mittelpunkt (10) der Zentralräder (2, 4) verlaufenden Linie (28) und einem durch den Mittelpunkt (14) der virtuellen Kopfkurve verlaufenden Fahrstrahl (26), welcher gemeinsam mit der Linie (28) in der virtuellen Zahnlücke (18) die Kopfkurve (20) schneidet.

3. Planetengetriebe nach Anspruch 1, dadurch gekennzeichnet, daß für einen innerhalb eines Quadranten (22) liegenden Eingriffsbereich der Mittelpunkt (14) der virtuellen Kopfkurve (20) im benachbarten Quadranten

7

(24) liegt, und zum Mittelpunkt (10) der beiden Zentralräder (2, 4) in der x- und y-Richtung jeweils einen Abstand (Delta x, Delta y) aufweist, der zumindest näherungsweise halb so groß wie die Höhe (H) der Kopfkurve im Eingriffsbereich, wobei in der Übergangszone der beiden Quadranten (22, 24) die Kopfkurve (20) abgeflacht ist.

4. Planetengetriebe nach Anspruche 2, dadurch gekennzeichnet, daß für einen innerhalb eines Quadranten (22) liegenden Eingriffsbereich der Mittelpunkt (14) der Kopfkurve (20) auf der Mittellinie (32) zum benachbarten Quadranten (24) liegt und zum Mittelpunkt (10) der beiden Zentralräder (2, 4) in der y-Richtung einen Abstand aufweist, der zumindest näherungsweise so groß ist wie die Höhe (H) der Kopfkurve im Eingriffsbereich, wobei im Bereich der Mittellinie (32) die Kopfkurve (20) abgeflacht ist.

5. Planetengetriebe nach einem der Ansprüche 1 bis 4, dadurch gekennzeichnet, daß die Flankenform der Gleitkeile oder Zähne (12) des Planetenrades derart vorgegeben ist, daß in den einzelnen Abschnitten der Radialverschiebung der Flankenwinkel im wesentlichen gleich ist dem zugehörigen Winkel (Alpha v) der virtuellen Zahnlücke (18).

6. Planetengetriebe nach einem der Ansprüche 1 bis 5, dadurch gekennzeichnet, daß der Flankenwinkel (Alpha 2) der Zähne des zweiten Zentralrades (4) mit der geringeren Zähnezahl um den zweifachen Einlaufwinkel (Beta) größer sind, als die Flankenwinkel (Alpha 1) der Zähne (6) des ersten Zentralrades (2) und daß die Flankenwinkel (Alpha 3) der Zähne (12) des Planetenrades einen dazwischenliegenden Wert aufweisen oder näherungsweise gleich groß sind wie die Flankenwinkel des zweiten Zentralrades (4).

7. Planetengetriebe nach einem der Ansprüche 1 bis 6, dadurch gekennzeichnet, daß die Zahnflanken der Zähne (12) des Planetenrades zum Zahnfuß und/oder zum Zahnkopf um einen vorgegebenen kleinen Winkel bzw. mit einem großen Krümmungsradius abgeflacht sind.

8. Planetengetriebe nach einem der Ansprüche 1 bis 7, dadurch gekennzeichnet, daß die Zahnflanken der Zähne (6, 8) der Zentralräder (2, 4) zum Zahnfuß und/oder zum Zahnkopf um einen vorgegebenen kleinen Winkel bzw. mit einem großen Krümmungsradius abgeflacht sind.

9. Planetengetriebe, insbesondere nach einem der Ansprüche 1 bis 8, dadurch gekennzeichnet, daß das Planetenrad (36) einen Tragring (38) für die als Gleitkeile ausgebildeten Zähne (12) aufweist, daß mittels eines Haltekörpers (42) für jeden Zahn eine Welle (40) mit dem Tragring (38) verbunden ist und daß die im Inneren teilweise hohl ausgebildeten Zähne (12) die Welle (40) über einen Winkel größer 180° umgreifen.

10. Planetengetriebe nach Anspruch 9, dadurch gekennzeichnet, daß die Wellen (40) als Hohlzylinder ausgebildet sind, in welche an beiden axialen Enden jeweils ein Haltekörper (42) mit einem Bolzen (48) eingreift, und/oder daß die Haltekörper (42) einen die jeweiligen Stirnflächen des Tragringes (38) umgreifenden Ansatz (44) aufweisen.

11. Planetengetriebe nach einem der Ansprüche 1 bis 10, dadurch gekennzeichnet, daß die Zähne (12) des Planetenrades mit ihren Spitzen (56), welche zweckmäßig abgerundet sind, an einem elastischen Haltering (50) anliegen.

12. Planetengetriebe nach einem der Ansprüche 1 bis 11, dadurch gekennzeichnet, daß die im Inneren teilweise hohl ausgebildeten Zähne (12) des Planetenrades (36) auf einer als Hohlzylinder ausgebildeten Welle (40) angeordnet sind, welche einen in Längsrichtung verlaufenden Schlitz (58) aufweist.

13. Planetengetribe nach einem der Ansprüche 1 bis 12, dadurch gekennzeichnet, daß zur Anpassung an die Änderung der effektiven Zahnhöhe der Zähne (12) des Planetenrades der Drehkörper (34) eine Tangenzkorrektur aufweist.

## Claims

1. Sun and planet gear with two central wheels arranged next to each other (2, 4), comprising a tooth number difference of four essentially wedge-shaped teeth (6, 8), which together form virtual tooth gaps (18) with a virtual addendum circle (20), and with a planet wheel (36), whose teeth (12) are pressed into the virtual tooth gaps (18) by means of a rotating body (34),
characterised in that the central point (14) of the virtual addendum circle (20) and the various radii (R1, R2) of the dedendum circle of the central wheels (2, 4) are determined so that in a meshing region that may be chosen in advance (Phi E), in which a number of the teeth (12) of the planet wheel (36) in the virtual tooth gaps (18) mesh with the teeth (6, 8), their running-in and/or their running-out angle (Beta) and/or the radial speed of the teeth (12) of the planet wheel (36) is essentially constant,
and that the flank angles (Alpha 1, 2) of the central wheels (2, 4) differ at least by substantially twice the running-in and/or running-out angle (Beta), wherein the quantities given above are defined as follows:
the running-in and/or running-out angle (Beta) lies between a line running through the central point (10) of the central wheels (2, 4) and a radial vector (26) running through the central point (14) of the virtual addendum circle (20), which, together with the line (28) in the virtual tooth gap (18) cuts the addendum circle (20);
the radial velocity is the velocity with wich the teeth (12) of the planet wheel (36) on the radial vector (26) run in or out into the cirtual tooth gaps (18).

2. Sun and planet gearing with two central wheels (2, 4) arranged next to each other comprising a tooth number difference of two essentially wedge-shaped teeth (6, 8), together forming virtual tooth gaps (18) with a virtual addendum circle (20), wherein the radii (R1, R2) of the dedendum circles of the two central wheels (2, 4) are different in size, and with a planet wheel (36), whose teeth are pressed into the virtual tooth gaps (18) by means of a rotating body (34),

characterised in that the central point (14) of the virtual addendum curve (20), and the different radii (R1, R2), are determined so that the virtual addendum circle (20) largely runs out of the teeth (6, 8) after a 90° rotation, and that the region of meshing (Phi E), in which a number of the teeth (12) of the planet wheel (36) mesh with the teeth (6, 8) in the virtual tooth gaps (18), is placed in the region of minimal change of the running-in and/or running-out angle (Beta), which is defined as the angle between a line (28) running through the central point (10) of the central wheels (2, 4) and a radial vector (26) running through the central point (14) of the virtual addendum curve, which cuts the addendum circle (20) together with the line (28), in the virtual tooth gap (18).

3. Sun and planet gearing according to claim 1, characterised in that for a meshing region lying within one quadrant (22), the central point (14) of the virtual addendum circle (20) lies in the neighbouring quadrant (24) and comprises in each case a distance (Delta x Delta y) in the x- and y-direction towards the central point (10) of both of the central wheels (2, 4), being at least approximately half as big as the height (H) of the addendum circle in the meshing region, wherein the addendum curve (20) is flattened in the transition zone of the two quadrants (22, 24).

4. Sun and planet gearing according to claim 2, characterised in that for a meshing region lying within one quadrant (22), the central point (14) of the addendum circle (20) lies on the central line (32) towards the neighbouring quadrant (24) and comprises a distance in the y direction towards the central point (10) of both central wheels (2, 4), which is at least approximately the size of the height (H) of the addendum curve in the meshing region, wherein the addendum curve (20) is flattened in the region of the central line (32).

5. Sun and planet gearing according to one of claims 1 to 4, characterised in that the flank shape of the sliding key or teeth edge (12) of the planet wheel is determined so that in the individual sections of the radial displacement, the edge angle is essentially the same as the corresponding angle (Alpha v) of the virtual tooth gap (18).

6. Sun and planet gearing according to one of claims 1 to 5, characterised in that the flank angle (Alpha 2) of the teeth of the second central wheel (4) with the smaller number of teeth is larger, by twice the running-in angle (Beta) than the flank angles (Alpha 1) of the teeth (6) of the first central wheel (2) and that the flank angles (Alpha 3) of the teeth (12) of the planet wheel have a value lying in between or of nearly the same magnitude as the flank angles of the second central wheel (4).

7. Sun and planet gearing according to one of claims 1 to 6, characterised in that the tooth profiles of the teeth (12) of the planet wheel are flattened towards the root of the tooth and/or the tip of the tooth, by a predetermined small angle, or with a large radius of curvature.

8. Sun and planet gearing according to one of claims 1 to 7, characterised in that the tooth profiles of the teeth (6, 8) of the central wheels (2, 4) are flattened towards the root of the tooth and/or to the tip of the tooth, by a predetermined small angle, or with a large radius of curvature.

9. Sun and planet gearing, especially according to one of claims 1 to 8, characterised in that the planet wheel (36) comprises a supporting ring (38) for the teeth (12) developed as sliding keys, that for each tooth, a shaft (40) is connected with the supporting ring (38) by means of a holding body (42), and that the teeth (12), partially hollow within, encompass the shaft (40) over an angle larger than 180°.

10. Sun and planet gearing according to claim 9, characterised in that the shafts (40) are developed as hhollow cylinders, into each of which a holdling body (42) with a bolt (48) intervenes at both axial ends, and/or that the holding bodies (42) comprise a lug (44) encompassing the corresponding front surfaces of the supporting ring (38).

11. Sun and planet gearing according to one of claims 1 to 10, characterised in that the teeth (12) of the planet wheel lie with their tips (56), which are rounded off for the purpose, against an elastic retaining ring (50).

12. Sun and planet gearing according to one of claims 1 to 11, characterised in that the teeth (12), partially hollow within, of the planet wheel (36) are arranged on shaft (40) developed as a hollow cylinder, which comprises a slit (58) running longitudinally.

13. Sun and planet gearing according to one of claims 1 to 12, characterised in that the rotating body (34) comprises a tangent correction for adapting to the change of the effective height of the teeth (12) of the planet wheel.

**Revendications**

1. Train épicycloïdal comprenant deux roues centrées (2, 4) juxtaposées, qui présentent une différence de nombres de dents de quatre et des dents sensiblement en forme de coins (6, 8) qui forment entre elles des creux de dentures virtuels (18) qui présentent une courbe de tête virtuelle (20), et une roue satellite (36) dont les dents (12) sont engagées dans les creux de dentures virtuels (18) au moyen d'un corps tournant (34), caractérisé en ce que le centre (14) de la courbe de tête virtuelle (20), ainsi que les rayons différents (R1, R2) des cercles de pied des roues centrées (2, 4) sont prédéterminés de telle manière que, dans une région d'engrènement (Phi E) qui peut être choisie à l'avance et dans laquelle un certain nombre des dents (12) de la roue satellite (36) sont en prise dans les creux de dentures virtuels (18) formés par les dents (6, 8) l'angle d'entrée et/ou l'angle de sortie (Beta) et/ou la vitesse radiale des dents (12) de la roue setallite (2, 36) soient

0 149 008

sensiblement constants, ET en ce que les angles de flanc (Alpha 1, 2) des roues centrées (2, 4) diffèrent l'un de l'autre d'une valeur au moins approximativement egale au double de l'angle d'entrée et/ou de l'angle de sortie (Beta), les grandeurs précitées étant définies comme suit:

- l'angle d'entrée et/ou l'angle de sortie (Beta) est formé entre une ligne (28) qui passe par le centre (10) des roues centrées (2, 4) et un rayon de déplacement (26) qui passe par le centre (14) de la courbe de tête virtuelle (20), qui coupe la courbe de tête (20) en coïncidence avec la ligne (28) dans le creux de denture virtuel (18),

- la vitesse radiale est la vitesse avec laquelle les dents (12) de la roue satellite (6) pénètrent dans les creux de dentures virtuels (18) ou en sortent en se déplaçant sur le rayon de déplacement (26).

2. Train épicycloïdal comprenant deux roues centrées juxtaposées (2, 4) qui présentent une différence de nombres de dents de deux et présent des dents (6, 8) sensiblement en forme de coins, qui forment entre elles des creux de dentures virtuels (18) présentant une courbe de tête virtuelle (20), les rayons (R1, R2) des cercles de pieds des deux roues centrées (2, 4) étant différents l'un de l'autre, et une roue satellite (36) dont les dents (12) sont engagées dans les creux de dentures virtuels (18) au moyen d'un corps tournant (34), caractérisé en ce que le centre (14) de la courbe de tête virtuelle (20) ainsi que les différents rayons (R1, R2) sont prédéterminés de telle manière que la courbe de tête virtuelle (20) sorte sensiblement des dents (6, 8) après une rotation de 90 degrés, et en ce que la région d'engrènement (Phi E) dans laquelle un certain nombre des dents (12) de la roue satellite (36) sont en prise avec les dents (6, 8), dans les creux de dentures virtuels (18), est placée dans la région de la variation minimale de l'angle d'entrée et/ou de sortie (Beta) qui est défini par l'angle compris entre une ligne (28) qui passe par le centre (10) des roues centrées (2, 4) et un rayon de déplacement (26) qui passe par le centre (14) de la courbe de tête virtuelle, rayon qui coupe la courbe de tête (20) en coïncidence avec la ligne (28) dans le creux de denture virtuel (18).

3. Train épicycloïdal selon la revendication 1, caractérisé en ce que, pour une région d'engrènement contenue à l'intérieur d'un quadrant (22), le centre (14) de la courbe de tête virtuelle (20) se trouve dans le quadrant voisin (24) et se trouve dans les directons x et y respectivement, à des distances (Delta x, Delta y) du centre (10) des deux roues centrées (2, 4), qui sont au moins à peu près égales à la moitié de la hauteur (H) de la courbe de tête dans la région d'engrènement, la courbe de tête (20) étant aplatie dans la zone de transition entre les deux quadrants (22, 24).

4. Train épicycloïdal selon la revendication 2, caractérisé en ce que, pour une région d'engrènement contenue à l'intérieur d'un quadrant (22), le centre (14) de la courbe de tête (20) se trouve sur un axe médian (32) du quadrant voisin (24) et se trouve dans la direction y, à une distance du centre (10) des deux roues centrées (2, 4) qui est au moins approximativement égale à la hauteur (H) de la courbe de tête dans la région d'engrènement, la courbe de tête (20) étant aplatie dans la région de l'axe médian (32).

5. Train épicycloïdal selon l'une des revendicaitons 1 à 4, caractérisé en ce que la forme de flancs des coins glissants ou dents (12) de la roue satellite est prédéterminée de manière que, dans les différents segments de la translation radiale, l'angle de flanc soit sensiblement égal à l'angle correspondant (Alpha v) du creux de denture virtuel (18).

6. Train épicycloïdal selon l'une des revendicaitons 1 à 5, caractérisé en ce que l'angle de flanc (Alpha 2) des dents de la deuxième roue centrée (4) qui possède le plus petit nombre de dents est supérieur, du double de l'angle d'entrée (Beta), à l'angle de flanc (Alpha 1) des dents (6) de la première roue centrée (2), ET en ce que les angles de flancs (Alpha 3) des dents (12) de la roue satellite présentent une valeur intermédiaire entre les angles des flancs des deux roues centrées ou sont approximativement égaux aux angles de flancs de la deuxième roue centrée (4).

7. Train épicycloïdal selon l'une des revendications 1 à 6, caractérisé en ce que les flancs des dents (12) de la roue satellite sont inclinés vers le pied de dent et/ou vers la tête de dent d'un petit angle prédéterminé ou présentent un grand rayon de courbure.

8. Train épicycloïdal selon l'une des revendications 1 à 7, caractérisé en ce que les flancs des dents (6, 8) des roues centrées (2, 4) sont inclinés vers le pied de dent et/ou vers la tête de dent, d'un petit angle prédéterminé ou avec un grand rayon de courbure.

9. Train épicycloïdal, notamment selon l'une des revendications 1 à 8, caractérisé en ce que la roue satellite (36) présente une couronne porteuse (38) qui porte les dents (12) constituées par des coins glissants, en ce que, pour chaque dent, un arbre (40) est réuni à la couronne porteuse (38) au moyen d'un corps de retenue (42), et en ce que les dents (12) qui sont partiellement creuses à l'intérieur entourent l'arbre (40) sur un angle de plus de 180 degrès.

10. Train épicycloïdal selon la revendication 9, caractérisé en ce que les arbres (40) sont des cylindres creux dans chacune des deux extrémités axiales desquelles un corps de retenue (42) est engagé par un tourillon (48) et/ou en ce que les corps de retenue (42) présentent une patte (44) qui s'emboîte sur la surface frontale correspondante da la couronne porteuse (38).

11. Train épicycloïdal selon l'une des revendications 1 à 10, caractérisé en ce que les dents (12) de la roue satellite sont appuyées contre une couronne de retenue élastique (50) par leurs pointes (56) qui sont avantageusement arrondies.

12. Train épicycloïdal selon l'une des revendications 1 à 11, caractérisé en ce que les dents (12) de la roue satellite (36) qui sont partiellement creuses à l'intérieur sont disposées sur un arbre (40) présentant la forme d'un cylindre creux et qui possède une fente (58) s'étendant dans la direction longitudinale.

13. Train épicycloïdal selon l'une des revendications 1 à 12, caractérisé en ce que pour l'adaptation à la variation de la hauteur effective des dents (12) de la roue satellite, le corps tournant (34) présente une correction de tangence.

FIG. 1

## FIG. 2

FIG.3

2

4

IV

36

12

42 40

42

IV

38

44

34

46

FIG. 4

FIG. 5

20

38

V.

FIG. 6

VII

12

40

38

VII

FIG. 7

40    48

42

44

FIG.8

FIG.9

FIG. 10

$\varphi = 90°$

$\varphi_E$

$\alpha V\,[\,0\,]$

| 0 | 66 |
| 1 | 67 |
| 2 | 68 |
| 3 | 69 |
| 4 | 70 |
| 5 | 71 |
| 6 | 72 |
| 7 | 73 |
| 8 | 74 |
| 9 | 75 |

FIG. 11

$\alpha 7 = 73°$

$\alpha 2 = 68°$

rK

12

FIG. 12

FIG. 13

FIG. 14

i = 1:10

FIG. 15

FIG. 16